# EUROPÄISCHE PATENTSCHRIFT

(11) **EP 2 790 299 B1**
(45) Veröffentlichungstag und Bekanntmachung des Hinweises auf die Patenterteilung: **30.11.2016**
(21) Anmeldenummer: 14163352.9
(22) Anmeldetag: 03.04.2014
(51) Int. Cl.: H02K 3/52, H02K 3/38

(54) **Statorkernbaugruppe**
Stator core module
Ensemble de noyau statorique

(30) Priorität: 10.04.2013 CN 201320178437 U
(43) Veröffentlichungstag der Anmeldung: 15.10.2014
(73) Patentinhaber: Siemens Aktiengesellschaft, 80333 München (DE)
(72) Erfinder: Chen, Guang Xun, 211100 Nanjing Jiangsu (CN); Huang, Jian Cheng, 211100 Nanjing Jiangsu (CN); Wei, Chao, 211100 Nanjing Jiangsu (CN); Xia, Bing Bing, 211100 Nanjing Jiangsu (CN); Yu, Ji Yuan, 211100 Nanjing Jiangsu (CN)
(74) Vertreter: Isarpatent

(56) Entgegenhaltungen:
- EP-A2- 2 568 578
- WO-A1-2007/048567
- JP-A- 2013 017 280
- US-A1- 2012 153 767

## Beschreibung

Diese Erfindung betrifft rotatorische dynamoelektrische Maschinen, vorzugsweise Elektromotoren, insbesondere eine Statorkernbaugruppe, einen Stator und eine damit ausgestattete rotatorische dynamoelektrische Maschine.

Die WO 2007/048567 A1 beschreibt eine Statorkernbaugruppe, umfassend einen Statorkern, Isolierpapier und einen Isolationsrahmen, wobei beide Seiten des Rahmens jeweils mit einer Vertiefung ausgebildet sind, und wobei in jeder der Vertiefung ein besagtes Isolierpapier vorgesehen ist.

Die US 2012/153767 A1 beschreibt eine Statorkernbaugruppe, welche einen Stator aufweist. Auf der Stirnfläche des Stators sind Ausnehmungen vorgesehen, in welchen Stifte einer Verschaltungseinheit eingreifen können.

Die JP 2013 017280 A beschreibt eine Statorkernbaugruppe, umfassend einen Statorkern, Isolierpapier und einen Isolationsrahmen. Der Statorkern weist auf seiner Stirnfläche Ausnehmungen auf, in welche Stifte einer Verschaltungsbaugruppe eingreifen können.

Basierend auf geteilten Statorkernen müssen vor dem Wickeln der Spule zuerst auf dem einzelnen Statorkern der Isolationsrahmen und das Isolierpapier befestigt werden. In der Regel wird der Statorkern durch die Kombination von mehreren scheibenförmigen Metallscheiben geformt. Jede Metallscheibe ist an ihren beiden Seiten jeweils mit einer Aussparung versehen, wodurch nach der Kombination zum Statorkern an beiden Seiten des Statorkerns zwei Rinnen geformt werden. Das Isolierpapier ist in diesen zwei Rinnen angeordnet.

Der Isolationsrahmen ist an beiden Enden des Statorkerns vorgesehen, um dieses Isolierpapier zu befestigen und festzuklemmen. Der Isolationsrahmen ist in Form eines H gestaltet. An der Innenseite des Isolationsrahmens, das heißt an der zum Kern gerichteten Seite, ist eine sich zum Kern erstreckende Kompressionsscheibe vorgesehen, zwischen der Kompressionsscheibe und dem geteilten Statorkern wird ein Zwischenraum vorgehalten, das Isolierpapier wird in diesen Zwischenraum eingesteckt, damit wird die Befestigung von Isolierpapier, Kern und Isolationsrahmen realisiert. Bei diesem Aufbau muss die Maßtoleranz zwischen Kern, Isolierpapier und Isolationsrahmen sehr gut kontrolliert werden, damit der Effekt der Befestigung erreicht werden kann, deshalb sind die Schwierigkeiten bei der Herstellung relativ hoch.

Der Erfindung liegt die Aufgabe zugrunde, einen neuen Aufbau einer Statorkernbaugruppe bereitzustellen, wobei durch geeignete Konstruktion des Aufbaus und Weiterentwicklung der Isolationsrahmen und das Isolierpapier einfach und schnell befestigt werden soll, ohne den Isolationseffekt zu beeinträchtigen.

Diese Aufgabe wird durch eine Statorkernbaugruppe mit den Merkmalen des Anspruchs 1 und durch eine dynamoelektrische rotatorische Maschine mit den Merkmalen des Anspruchs 4 gelöst. Vorteilhafte Ausgestaltungen ergeben sich aus den abhängigen Ansprüchen.

Erfindungsgemäß umfasst eine Statorkernbaugruppe einen Statorkern, Isolierpapier und Isolationsrahmen, wobei beide Seiten des besagten Statorkerns jeweils mit einer Vertiefung ausgebildet sind, in jeder besagten Vertiefung ein besagtes Isolierpapier vorgesehen ist, an beiden Enden des besagten Statorkerns und des besagten Isolierpapiers jeweils ein besagter Isolationsrahmen vorgesehen ist, am Endteil des besagten Statorkerns mindestens eine Stecköffnung vorgesehen ist, an der Innenseite des besagten Isolationsrahmens ein der besagten Stecköffnung entsprechender Befestigungsstift vorgesehen ist.

Dabei wird am ersten Ende der besagten zwei Isolierpapiere ein Verbindungsteil angebunden und gebildet. Am zweiten Ende jedes besagten Isolierpapiers wird ein Biegeteil gebildet. Die Außenseite des Mittelteils des Isolationsrahmens, der dem besagten zweiten Ende zugeordnet ist, bildet eine Rinne. Der Keil wird in die besagte Rinne eingefügt und presst das besagte Biegeteil an.

Gemäß eines weiteren Aspekts dieser Erfindung wird am ersten Ende und am zweiten Ende jedes besagten Isolierpapiers ein Biegeteil gebildet. Die Außenseite des Mittelteils jedes Isolationsrahmens bildet eine Rinne. Der Keil wird in die besagte Rinne eingefügt und presst das besagte Biegeteil an.

Die positiven Fortschritte und Effekte dieser Erfindung bestehen in folgendem:
1. Einfacher Aufbau, hohe Zuverlässigkeit, einfache Montage, hoher Wirkungsgrad, Verringerung der Arbeitsintensität der Beschäftigten.
2. Das Isolierpapier und die Isolationsrahmen werden vollständig gestützt auf den mechanischen Aufbau befestigt, die Verwendung von einigen Hilfsstoffen wie Kleber wird verringert, wodurch Kosten eingespart werden.

Die Erfindung sowie vorteilhafte Ausgestaltungen der Erfindung sind den folgenden prinzipiell dargestellten Ausführungsbeispielen zu entnehmen, darin zeigen:
- FIG 1: eine schematische Darstellung eines herkömmlichen Statorkerns,
- FIG 2: die schematische Darstellung des Isolierpapiers eines Ausführungsbeispiels gemäß dieser Erfindung,
- FIG 3: die schematische Darstellung des Statorkerns eines Ausführungsbeispiels gemäß dieser Erfindung,
- FIG 4: die schematische Darstellung des Isolationsrahmens eines Ausführungsbeispiels gemäß dieser Erfindung,
- FIG 5: die schematische Darstellung des Isolationsrahmens aus FIG 4 aus einer anderen Richtung,
- FIG 6: die schematische Darstellung des Keils eines Ausführungsbeispiels gemäß dieser Erfindung,
- FIG 7: die schematische Darstellung der Statorkernbaugruppe eines Ausführungsbeispiels gemäß dieser Erfindung,
- FIG 8: die schematische Darstellung der Statorkernbaugruppe aus FIG 7 aus einer anderen Richtung,
- FIG 9: Querschnitt eines Stators,
- FIG 10: Längsschnitt einer dynamoelektrischen Maschine.

In der nachfolgenden Beschreibung werden viele konkrete Details aufgeführt, die jedoch nicht immer im Einzelnen behandelt werden. Somit wird in manchen Fällen die bekannte Technik aus Übersichtlichkeitsgründen nicht näher beschrieben.

Wie vorstehend dargestellt, umfasst die Statorkernbaugruppe Statorkern, Isolierpapier und Isolationsrahmen, die miteinander befestigt sind. Dabei bilden die beiden Seiten des Statorkerns eine Vertiefung für die Montage des Isolierpapiers, die Isolationsrahmen sind an beiden Enden des Statorkerns montiert und befestigen das Isolierpapier auf dem Statorkern.
Diese Erfindung stellt eine neue Statorkernbaugruppe bereit, die gleichermaßen Statorkern, Isolierpapier und Isolationsrahmen umfasst. Die Unterschiede dieser Erfindung zu herkömmlichen Statorkernen werden weiter unten beschrieben.

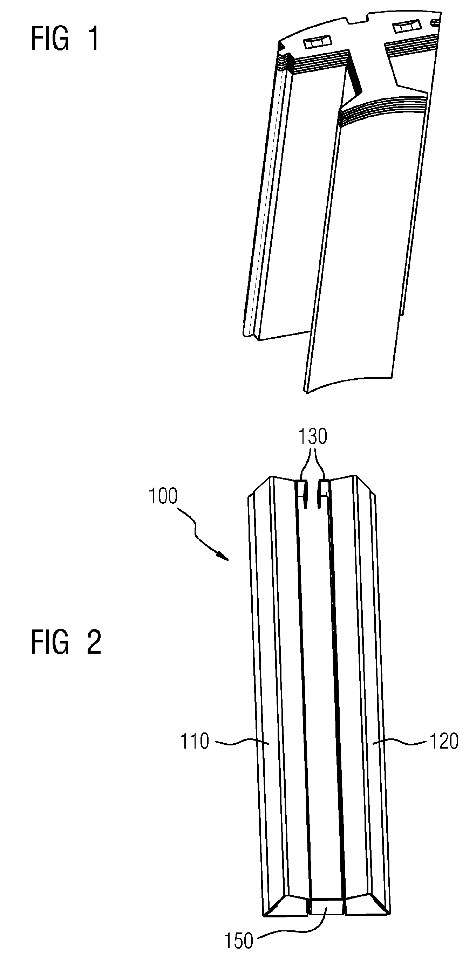

In einem erfindungsgemäßen Ausführungsbeispiel gemäß FIG 2, umfasst das Isolierpapier 100 einen ersten Teil 110 und einen zweiten Teil 120. Gemäß FIG 2 sind der erste Teil 110 und der zweite Teil 120 an ihrem ersten Ende miteinander verbunden und bilden den Verbindungsteil 150, gleichzeitig bilden der erste Teil 110 und der zweite Teil 120 an ihrem jeweiligen zweiten Ende den Biegeteil 130. Hier wird "erste" und "zweite" lediglich zwecks Vereinfachung der Beschreibung verwendet und dient nicht speziell der Darstellung bestimmter Merkmale.

Abgesehen vom unterschiedlichen Aufbau der beiden Endteile, für den ersten Teil 110 und den zweiten Teil 120 des Isolierpapiers 110 kann ein mit dem herkömmlichen Stand der Technik identischer Aufbau verwendet werden; ebenso kann auch ein unterschiedlicher Aufbau verwendet werden. Zum Beispiel können dieser erste Teil und der zweite Teil aus derselben Isolierpapierrolle gebogen werden. Ebenso können dieser erste Teil und der zweite Teil auch aus zwei Blatt oder aus mehreren Isolierpapierrollen gebogen werden.

Obwohl im Beispiel, das in FIG 2 gezeigt wird, der erste Teil 110 und der zweite Teil 120 am ersten Ende miteinander verbunden sind, können außerdem jedoch in anderen Beispielen der erste Teil 110 und der zweite Teil 120 voneinander getrennt sein, und an beiden Enden ist ein besagtes Biegeteil 130 vorgesehen.

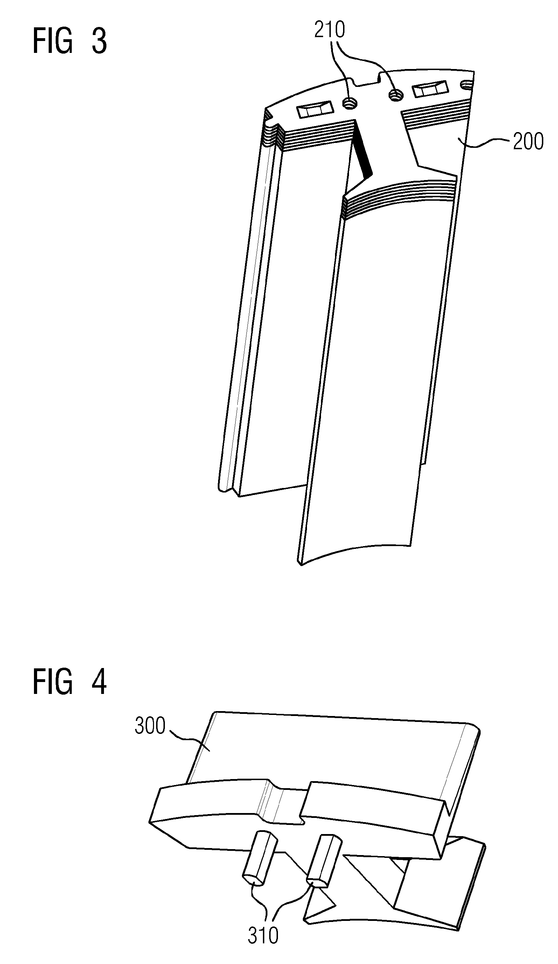

FIG 3 zeigt den Statorkern eines Ausführungsbeispiels gemäß dieser Erfindung. Jede Stirnfläche des Statorkerns 200 ist mit zwei Stecköffnungen 210 versehen. Obwohl im Beispiel von FIG 3 jede Stirnfläche mit zwei Stecköffnungen versehen ist, können jedoch in anderen Beispielen an den Stirnflächen des Statorkerns mehr oder weniger Stecköffnungen angeordnet sein, und auch die Tiefe und die Position der Stecköffnungen können gemäß der konkreten Situation festgelegt werden und sind nicht auf die von FIG 3 gezeigte Situation sowie die konkrete Darstellung dieser Beschreibung beschränkt.

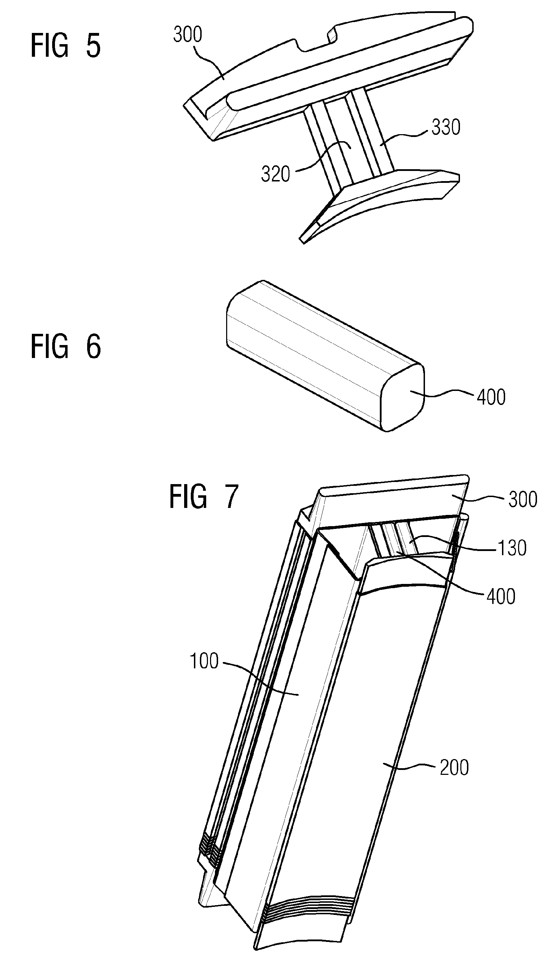

FIG 4 und 5 zeigen den Isolationsrahmen eines Ausführungsbeispiels gemäß dieser Erfindung.

FIG 4 zeigt die Innenseite des besagten Isolationsrahmens, das heißt die zum Statorkern gerichtete Seite. An der Innenseite dieses Isolationsrahmens 300 sind Befestigungsstifte 310 vorgesehen, die mit den Stecköffnungen 210 des Endteils des in FIG 3 gezeigten Statorkerns 200 zusammenpassen. FIG 4 zeigt die Befestigungsstifte 310 in der Anzahl, die den Stecköffnungen in FIG 3 entspricht. Es ist jedoch selbstverständlich, dass ähnlich wie bei den Stecköffnungen die Anzahl, Position und Länge der Befestigungsstifte gemäß der konkreten Anwendung verändert werden kann und nicht auf die konkrete Darstellung gemäß dieser Beschreibung beschränkt sind.

Wie FIG 5 zeigt, kann an der Außenseite (das ist die rückseitig zum Statorkern gerichtete Seite) des Mittelteils 330 des Isolationsrahmens 300 außerdem eine Rinne 320 vorgesehen sein. Der Biegeteil 130 des in FIG 2 gezeigten Isolierpapiers 100 kann in die besagte Rinne 320 eingesteckt werden. Der in FIG 6 gezeigte Keil 400 kann in diese Rinne 320 eingefügt werden und presst das Biegeteil 130 in der besagten Rinne 320 an.

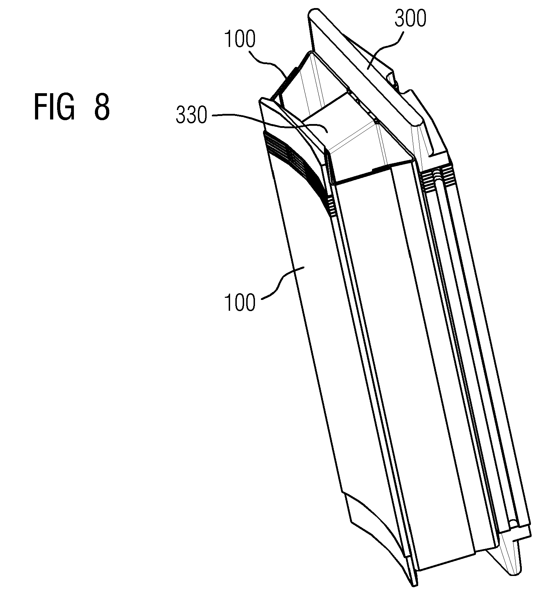

FIG 7 und 8 zeigen jeweils das Endteil der schematischen Darstellung der Statorkernbaugruppe nach der Montage unter Verwendung der vorstehend beschriebenen Teile.

Wie FIG 7 zeigt, wird der Biegeteil 130 des Isolierpapiers 100 in die Rinne 320 des Isolationsrahmens 300 eingesteckt. Der Keil 400 wird in die besagte Rinne 320 eingefügt. Der Biegeteil 130 des Isolierpapiers wird durch den Keil 400 in der besagten Rinne 320 angepresst.

Wie FIG 8 zeigt, bedeckt am anderen Endteil der Statorkernbaugruppe der Verbindungsteil 150 (in FIG 8 nicht abgebildet) des Isolierpapiers 100 den Mittelteil (Außenseite von 330) des Isolationsrahmens.

Da im oben dargestellten Beispiel der Statorkernbaugruppe zwei Teile des Isolierpapiers 100 am besagten ersten Ende verbunden werden, ist von den verwendeten zwei Isolationsrahmen davon der für das erste Ende verwendete Isolationsrahmen nicht mit der besagten Rinne versehen, auch die Verwendung des Keils 400 ist nicht erforderlich.

Die Ausführung ist jedoch auch so zu verstehen, dass die beiden Isolationsrahmen an der Außenseite des Mittelteils 330 mit einer Rinne versehen sein sollen, wenn die beiden Endteile des Isolierpapiers 100 voneinander getrennt sind, und ein Keil 400 verwendet wird, um den Biegeteil in der Rinne 320 anzupressen.

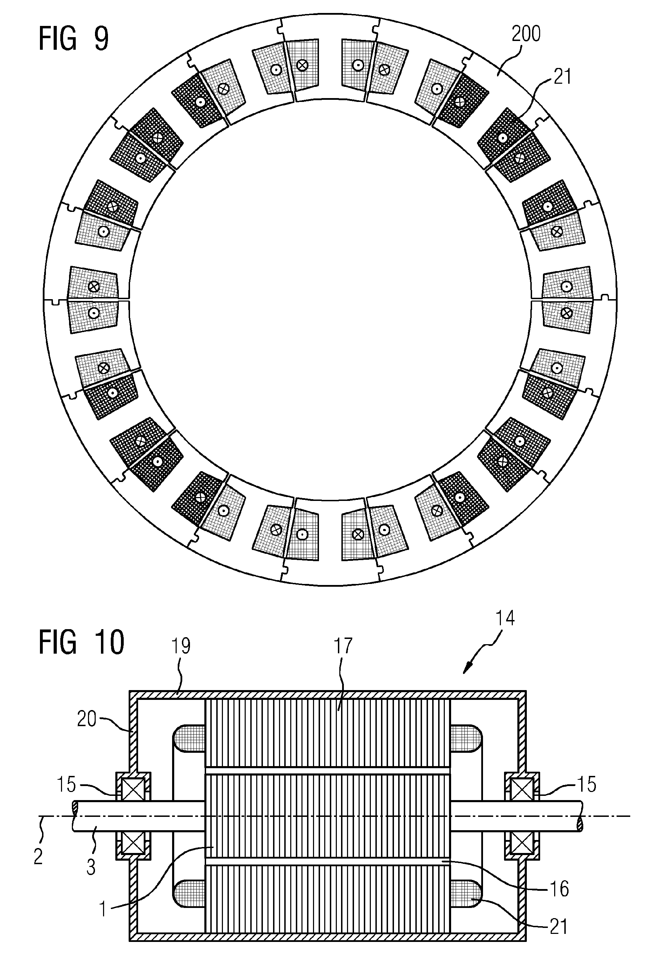

FIG 9 zeigt einen Stator im Querschnitt mit in Umfangsrichtung zusammengesetzten Zähnen - also Statorkernen 200. Dabei sind in jeder Nut des Stators zwei Abschnitte unterschiedlicher Zahnspulen 21.

Erfindungsgemäß ist dabei die Statorkernbaugruppe gemäß FIG 9 als in Umfangsrichtung segmentierter Stator 17 zu verstehen, dessen einzelne Zähne - also der Statorkern 200 - zu einem Stator zusammengesetzt sind. Das Isolierpapier 100 dient dabei der Isolierung eines prinzipiell dargestellten Wicklungssystems 21 des Stators 17 gegenüber dem geerdeten Blechpaket, also den Einzelzähnen des Stators 17 und der Isolierung gegenüber benachbarten unterschiedlicher Phasen des Wicklungssystems 21. Das Wicklungssystem 21 ist dabei vorzugsweise als Zahnspulenwicklung ausgeführt, d.h. eine Spule umfasst einen Zahn. Bei einem zusammengesetzten Stator 17 sind dabei in jeder Nut, also dem Zwischenraum zwischen zwei Zähnen Spulenabschnitte unterschiedlicher Spulen und/oder Phasen des Wicklungssystems 21 vorhanden.

Derartige dynamoelektrische Maschinen 14 gemäß FIG 10 sind vorzugsweise bei Werkzeugmaschinen oder Produktionsmaschinen also auch bei Lüftern und Pumpen im Einsatz. Ein Rotor 1 dreht sich dabei im Betrieb dieser dynamoelektrischen rotatorischen Maschine 14 um eine Achse 2. Der Rotor 1 ist durch einen Luftspalt 16 von einem Stator 17 getrennt. Über diesen Luftspalt 16 erfolgt im Betrieb der dynamoelektrischen rotatorischen Maschine 14 eine elektromagnetische Wechselwirkung zwischen dem bestromten Wicklungssystem 21 des Stators 17 und dem Rotor 1, die zur Drehung der Welle 3 führt. Die dynamoelektrische rotatorische Maschine 14 ist in einem Gehäuse 19 angeordnet, in dem auch Lagerschilde 20 positioniert sind, die die Lager 15 halten.

Dabei stützt sich eine Welle 3 auf den Lagern 15 ab. Auf diese Welle 3 ist der Rotor 1 geschrumpft oder durch andere mechanische Mittel mit der Welle 3 drehfest verbunden.

Vorstehend erfolgte in Verbindung mit den konkreten Ausführungsformen eine detaillierte Beschreibung dieser Erfindung. Selbstverständlich erstreckt sich die Erfindung auch auf Modifikationen und äquivalente Formen.

Deshalb sollen die Ansprüche dieser Anmeldung so interpretiert werden, dass sie alle solche Modifikationen und äquivalenten Formen umfassen.

## Patentansprüche

1. Statorkernbaugruppe, umfassend einen Statorkern (200), Isolierpapier (100) und Isolationsrahmen (300), wobei beide Seiten des besagten Statorkerns jeweils mit einer Vertiefung ausgebildet sind, in jeder besagten Vertiefung ein besagtes Isolierpapier vorgesehen ist, an beiden Enden des besagten Statorkerns und des besagten Isolierpapiers jeweils ein besagter Isolationsrahmen vorgesehen ist, **dadurch gekennzeichnet , dass** am Endteil des besagten Statorkerns (200) mindestens eine Stecköffnung (210) vorgesehen ist, an der Innenseite des besagten Isolationsrahmens (300) ein der besagten Stecköffnung (210) entsprechender Befestigungsstift (310) vorgesehen ist, wobei am zweiten Ende jedes besagten Isolierpapiers (100) ein Biegeteil (130) gebildet wird, wobei die Außenseite des Mittelteils (330) des Isolationsrahmens (300), der dem besagten zweiten Ende zugeordnet ist, eine Rinne (320) bildet, wobei der Biegeteil in der Rinne angeordnet ist, und wobei ein Keil (400) in der besagten Rinne (320) eingefügt ist und das besagte Biegeteil (130) anpresst.

2. Statorkernbaugruppe gemäß Anspruch 1, **dadurch gekennzeichnet , dass** am ersten Ende der besagten zwei Isolierpapiere (100) ein Verbindungsteil (150) angebunden und gebildet wird.

3. Statorkernbaugruppe gemäß Anspruch 1, **dadurch gekennzeichnet , dass** das erste Ende und das zweite Ende jedes besagten Isolierpapiers (100) ein Biegeteil (130) bilden.

4. Dynamoelektrische rotatorische Maschine (14) mit zumindest einer Statorkernbaugruppe nach einem der vorhergehenden Ansprüche 1 bis 3.

## Claims

1. Stator core assembly, comprising a stator core (200), insulating paper (100) and insulation frame (300), wherein both sides of the said stator core are each formed with a recess, a said insulating paper being provided in each said recess, a said insulation frame being provided at both ends of the said stator core and of the said insulating paper in each case, **characterized in that** at least one insertion opening (210) is provided at the end part of the said stator core (200), a fastening pin (310) which corresponds to the said insertion opening (210) being provided on the inside of the said insulation frame (300), wherein a bending part (130) is formed at the second end of each said insulating paper (100), wherein the outside of the central part (330) of the insulation frame (300), which is associated with the said second end, forms a channel (320), wherein the bending part is arranged in the channel, and wherein a chock (400) is inserted into the said channel (320) and presses against the said bending part (130).

2. Stator core assembly according to claim 1, **characterized in that** a connecting part (150) is attached and formed at the first end of the said two insulating papers (100).

3. Stator core assembly according to claim 1, **characterized in that** the first end and the second end of each said insulating paper (100) form a bending part (130).

4. Dynamoelectrical rotary machine (14) comprising at least one stator core assembly according to one of the preceding claims 1 to 3.

## Revendications

1. Ensemble de noyau statorique, comprenant un noyau statorique (200), du papier isolant (100) et des cadres isolants (300), dans lequel les deux côtés dudit noyau statorique sont respectivement configurés avec un creux, il est prévu dudit papier isolant dans chacun desdits creux et il est respectivement prévu un tel cadre isolant aux deux extrémités dudit noyau statorique et dudit papier isolant, **caractérisé en ce qu'**il est prévu au moins une ouverture d'enfichage (210) sur la partie d'extrémité dudit noyau statorique (200), il est prévu sur le côté intérieur dudit cadre isolant (300) une tige de fixation (310) correspondant à ladite ouverture d'enfichage (210), dans lequel une partie pliée (130) est formée à la deuxième extrémité de chaque papier isolant précité (100), dans lequel le côté extérieur de la partie moyenne (330) du cadre isolant (300), qui est associé à ladite deuxième extrémité, forme un chenal (320), dans lequel la partie pliée est disposée dans le chenal, et dans lequel un coin (400) est introduit dans ledit chenal (320) et presse ladite partie pliée (130).

2. Ensemble de noyau statorique selon la revendication 1, **caractérisé en ce qu'**une partie de liaison (150) est reliée et formée à la première extrémité desdits deux papiers isolants (100).

3. Ensemble de noyau statorique selon la revendication 1, **caractérisé en ce que** la première extrémité et la deuxième extrémité de chacun desdits papiers isolants (100) forment une partie pliée (130).

4. Machine rotative dynamoélectrique (14) avec au moins un ensemble de noyau statorique selon l'une quelconque des revendications précédentes 1 à 3.
